# EUROPEAN PATENT SPECIFICATION

(11) **EP 1 555 283 B1**
(45) Date of publication and mention of the grant of the patent: **28.02.2007**
(21) Application number: 03758786.2
(22) Date of filing: 22.10.2003
(51) Int. Cl.: C08K 13/02, C08J 3/20, C08L 101/00

(54) **RESIN MOLDED PRODUCT FOR ELECTRIC PARTS AND MANUFACTURING METHOD THEREOF**
HARZFORMKÖRPER FÜR ELEKTRISCHE TEILE UND HERSTELLUNGSVERFAHREN DAFÜR
PRODUIT MOULE EN RESINE POUR COMPOSANTS ELECTRIQUES ET SON PROCEDE DE FABRICATION

(30) Priority: 23.10.2002 JP 2002308111; 21.05.2003 JP 2003143952
(43) Date of publication of application: 20.07.2005
(73) Proprietor: FUJI ELECTRIC HOLDINGS CO., LTD., Kawasaki-shi, Kanagawa 210-0856 (JP)
(72) Inventor: KANNO, Toshiyuki Fuji Electr. Advanced Tec.co.Ltd, Kanagawa 240-0194 (JP); Onitsuka, Asuka Fuji Elec. Advanced Tec.Co.Ltd, Kanagawa 240-0194 (JP)
(74) Representative: Appelt, Christian W.
(86) International application number: PCT/JP2003/013497
(87) International publication number: WO 2004/037904

(56) References cited:
- EP-A- 0 055 898
- EP-A- 0 389 084
- EP-A- 0 405 982
- EP-A- 0 613 155
- JP-A- 2 209 934
- JP-A- 3 033 134
- JP-A- 5 043 633
- JP-A- 11 315 156
- JP-A- 60 108 437
- JP-A- 61 243 831
- JP-A- 2002 265 631
- JP-A- 2003 041 128
- JP-A- 2003 327 726
- US-A- 3 839 392

## Description

### TECHNICAL FIELD

The present invention relates to a resin molded article for electric part, which is suitably used as, for example, a member for supporting a contact of electromagnetic switch and a housing and which is excellent in thermal characteristics such as heat resistance, flame retardancy, and dimensional stability and mechanical characteristics such as abrasion resistance, and to a production process of the same.

### BACKGROUND ART

In general, resin molded articles to be used in electric parts and the like are required to have thermal characteristics such as heat resistance and flame retardancy in addition to mechanical characteristics such as high strength, dimensional stability and abrasion resistance in comparison with general purpose plastics. As such resin molded articles for electric part, thermosetting resins such as epoxy resins and phenol based resins have hitherto been frequently used.

However, in recent years, resin molded articles for electric part are required to have recycle properties as a measure against the environment in addition to lightening by thin-walled molded articles and improvements of mechanical characteristics and flame retardancy, and resin molded articles for electric part using a thermoplastic resin from the standpoint of these required performances are being studied.

On the other hand, an electromagnetic switch as one example of the foregoing electric parts is widely used as an important constructive part of the control system in the fielding including circuits and capacitor load switching to be used in electron appliances such as PLC and inverters. This molded article is necessary to be durable to heat generated in a contact that is required to have sliding properties and a load due to a repeated movement of the contact and therefore, is one of parts required to have high physical properties regarding mechanical strength, heat resistance, dimensional stability, electric characteristics, flame retardancy, and the like as described above.

Also, since molded articles are required such that they can be subjected to thin-walled molding and have good productivity and dimensional precision, they are frequently produced by a molding method such as injection molding. Accordingly, it is preferable that general purpose thermoplastic resins can be used.

However, so far as a thermoplastic resin is used, there are limits in heat resistance, mechanical strength, dimension stability, and flame retardancy according to the resin alone. In particular, in electromagnetic switches, it is difficult to meet all of required characteristics including costs and lightening. For that reason, addition of various reinforcing materials, modification of resins, and the like are being studied.

For example, as modification of thermoplastic resins, it is known that a thermoplastic resin is crosslinked by radiations such as electron beams and γ-rays to improve the heat resistance, whereby mechanical strength and abrasion resistance of the surface are improved. A non-patent document, *Porima no Tomo* (Polymer Friends), Vol. 17, No. 7, pp. 435-444 (1980) discloses a method for crosslinking a molten polyethylene resin (PE) with electron beams during coating an electric wire and that a resin can be modified by radiation polymerization of a polyester resin molded article.

Also, JP-A-57-119911 and JP-A-59-12935 disclose that after adding a crosslinking agent to a polyamide based resin, crosslinking is performed upon irradiation with radiations, thereby improving heat resistance and the like, wherein triallyl cyanurate or triallyl isocyanurate is used as the crosslinking agent.

Also, JP-A-61-7336 discloses a thermally recoverable article made of a resin composition composed of a copolymer of a polyamide and a polyether amide having a polyfunctional acrylate monomer or a polyfunctional methacrylate monomer incorporated thereinto and crosslinked upon irradiation with radiations.

Further, JP-A-2001-40206 discloses a polyamide based resin composition as a crosslinking type polyamide based resin using a crosslinking agent, which is crosslinked by heating, the polyamide based resin composition being composed of comprising (A) a polyamide based resin, (B) one radical generator selected from a 1,2-diphenylethane derivative having a specific structure or a diisopropylbenzene oligomer, and (C) a polyfunctional monomer having at least two carbon-carbon double bonds in the molecule thereof and a crosslinking type polyamide based resin obtained by heating and crosslinking it at a temperature of from 220 to 320 °C.

Also, as other resin modification methods, it is known by a non-patent document, *J. App. Polymer. Sci.,* Vol. 28, 3387-3398 (1983) that a resin is crosslinked and cured by a silane coupling agent; and for example, JP-A-2002-265631 discloses a resin molded article for electric part obtained by molding and solidifying a resin composition containing a polymer composed mainly of a polyamide, an inorganic filler and a silane coupling agent and after an injection step, heating the resulting molded article, thereby crosslinking and curing it with the silane coupling agent.

Further, it is studied by JP-A-47-41745 and JP-A-51-39750 that a melamine derivative, cyanuric acid, or isocyanuric acid is blended as a flame retarder, thereby imparting flame retardancy to a polyamide resin.

EP-A-0 405 982 discloses compositions for making electric articles comprising thermoplastic resin, fillers among which also fibers, crosslinking agents (C) - (F) comprising additionally a polyfunctional monomer, each in amounts of 0.01 - 7, preferably 0.05 - 4 pbw based on the total weight of the thermoplast resin and/or a rubbery substance. The simultaneous presecnce of both a filler and a fiber is not disclosed.

EP-A-0 613 155 discloses the thermal crosslinking of a first polymer having thermoplasticity i.e. of a thermoplastic polymer with a trifunctional borazine, but no fillers or fibers are mentioned.

However, among the foregoing conventional technologies, in the thermoplastic resin molded articles employing crosslinking with radiations as disclosed in JP-A-57-119911, JP-A-59-12935, and JP-A-61-7336, shrinkage or resin decomposition by crosslinking and curing was likely caused, whereby deformation likely occurred. Also, during kneading into the resin or molding, there was the possibility that the crosslinking assistant is vaporized to cause foaming or that the composition changes to cause gelation. Further, there was encountered a problem that the surface of a mold is stained to cause deterioration of the molding properties, whereby a thin-walled and precise molded article is not obtained. Moreover, there was encountered a problem that during adding a flame retardant or the like, bleed-out is caused, whereby a uniform resin composition is not obtained.

Also, when used as molded parts such as the foregoing electromagnetic switch, connector or breaker, there was the possibility that an unreacted monomer or a decomposed gas of the crosslinking agent is generated by the crosslinking with radiations, bleed-out of an oligomerized material takes place, thereby causing metallic staining of electrodes, etc., or attachment takes place at the time of driving, thereby causing an erroneous actuation. Further, there was encountered a problem that mechanical characteristics such as abrasion resistance are lowered, or a dimensional change is caused.

Also, in the resin compositions for performing crosslinking and curing by a thermal catalyst or a silane coupling agent as disclosed in JP-A-2001-40206 and JP-A-2002-265631, the crosslinking reaction partly proceeds even by heating in a mold at the time of injection molding. For that reason, there was encountered a problem that it is difficult to control the crosslinking, or a spool portion that is excessive at the time of molding cannot be recycled.

Also, in imparting flame retardancy by blending a melamine derivative, cyanuric acid, or isocyanuric acid as disclosed in JP-A-47-41745 and JP-A-51-39750, there was encountered a problem that the resulting molded article is not sufficient in heat resistance, dimensional change, and mechanical characteristics.

### DISCLOSURE OF THE INVENTION

Accordingly, an object of the invention is to provide a resin molded article for electric part, which is excellent in heat resistance, mechanical characteristics, electric characteristics, dimensional stability, flame retardancy, and molding properties, which can be suitably used especially as a member for supporting a contact of electromagnetic switch, a housing, and the like, and which is suitable for injection molding using a thermoplastic resin and a production process of the same.

For the sake of solving the foregoing problem, the resin molded article for electric part of the invention is characterized by one resulting from molding and solidifying a resin composition containing a thermoplastic polymer, a crosslinking agent comprising a polyfunctional monomer or oligomer containing an unsaturated group in ends of the major skeleton, an inorganic filler, and a reinforcing fiber, then crosslinking the foregoing thermoplastic polymer by heating or radiations, and wherein said crosslinking agent comprises at least a trifunctional crosslinking agent and is absorbed to said inorganic filler, with the content of the foregoing crosslinking agent being from 0.5 to 10 parts by weight based on 100 parts by weight of the foregoing thermoplastic polymer.

According to the resin molded article for electric part of the invention, by subjecting the major component polymer to crosslinking reaction by heating or radiations into a three-dimensional network structure, it is possible to improve heat resistance and mechanical strength. By using a crosslinking agent containing at least a trifunctional crosslinking agent as a crosslinking agent, it is possible to form a uniform three-dimensional network structure, thereby making the resin molded article have more excellent heat resistance and mechanical strength. And, by containing the crosslinking agent in an amount of from 0.5 to 10 parts by weight based on 100 parts by weight of the thermoplastic polymer, it is possible to keep the mechanical strength of the molded article and improve the dimensional stability. Further, by using the inorganic filler and the reinforcing fiber in combination, it is possible to obtain a resin molded article which is suppressed in shrinkage and decomposition due to the crosslinking and which is excellent in all of chemical stability, heat resistance, mechanical characteristics, electric characteristics, dimensional stability, flame retardancy, and molding properties. Moreover, it becomes possible to achieve thin-walled molding processing.

Also, in the case of crosslinking with radiations, since the crosslinking reaction does not proceed at all at the time of heat molding such as injection molding, it is possible to recycle a spool portion that is excessive at the time of molding as thermoplastic resins.

On the other hand, the production process of a resin molded article for electric part of the invention is characterized by including an adsorbing step for adsorbing a crosslinking agent comprising a polyfunctional monomer or oligomer containing an unsaturated group in ends of the major skeleton onto an inorganic filler; a kneading step for kneading a resin composition containing the inorganic filler after the adsorption, a thermoplastic polymer, and a reinforcing fiber; a step for injecting molding the foregoing kneaded resin composition; and a crosslinking step for taking out the foregoing resin composition after the injection step from a mold and heating it or irradiating it with radiations.

According to this production process, it is possible to perform the same molding as in usual thermoplastic resins using an injection molding machine. Further, after the injection, by performing crosslinking by heating or radiations, the crosslinking reaction is accelerated, thereby advancing curing. Accordingly, it is possible to produce a resin molded article having excellent mechanical strength, heat resistance and flame retardancy with good productivity.

Also, after adsorbing the crosslinking agent onto the inorganic filler, the resulting inorganic filler is kneaded with the thermoplastic polymer and the reinforcing filler, and therefore, dispersion of the crosslinking agent is performed uniformly. In this way, physical properties of the resulting resin molded article become uniform. Thus, it is possible to obtain a resin molded article which is excellent in all of heat resistance, mechanical characteristics, electric characteristics, dimensional stability, flame retardancy, and molding properties.

Incidentally, in the case of performing the crosslinking step upon irradiation with radiations, it is preferred to irradiate electron beams or γ-rays having a dosage of 10 kGy or more. In this way, it is possible to prevent heterogeneous formation of a three-dimensional network structure due to a shortage of the dosage or bleed-out due to the unreacted residual crosslinking agent. Also, in particular, when the irradiation dosage is from 10 to 45 kGy, it is possible to prevent deformation or shrinkage or the like due to an internal strain of the resin composition caused by an oxidation decomposition product which is generated by an excess of the dosage, thereby obtaining a resin molded article which is excellent in the foregoing physical properties.

Also, in the case of performing the crosslinking step by heating, it is preferred to perform heating at a temperature of at least 5 °C higher than the temperature of the foregoing injection molding. In this way, a unit for irradiating radiations or the like is not necessary, and in particular, this crosslinking step can be suitably employed for a thermosetting resin-containing resin composition.

According to a more preferred embodiment of the resin molded article for electric part and the production process of the same of the invention, it is preferable that two or more kinds of the foregoing polyfunctional crosslinking agent are used in combination as the foregoing crosslinking agent. In this way, for example, by using crosslinking agents having different reactivity, such as an allylate and an acrylate, in combination, a reaction rate required for crosslinking can be controlled, and therefore, it is possible to prevent shrinkage of the resin molded article due to rapid progress of the crosslinking reaction. Also, for example, by using the foregoing bifunctional crosslinking agent and the foregoing trifunctional crosslinking agent in combination, a reaction rate required for crosslinking can be controlled, too, and therefore, it is possible to prevent shrinkage of the resin molded article due to rapid progress of the crosslinking reaction.

According to a more preferred embodiment of the resin molded article for electric part and the production process of the same of the invention, it is preferable that the foregoing thermoplastic polymer is a polyamide based resin and that the major skeleton of the foregoing crosslinking agent is an N element-containing cyclic compound. In this way, since the compatibility of the amide group with the N element is more enhanced, the compatibility with the polyamide based resin is improved. Also, since the N element-containing cyclic compound that is the crosslinking agent has flame retardancy itself, the flame retardancy of the resin molded article is improved.

According to a more preferred embodiment of the resin molded article for electric part and the production process of the same of the invention, it is preferable that the foregoing crosslinking agent is a compound represented by the following general formula (I).

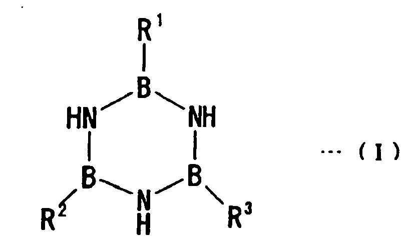

(In the formula (I), R¹ to R³ each represents a group selected from -O-R⁴-CR⁵=CH₂, -R⁴-OOC-CR⁵=CH₂, -R⁴-CR⁵=CH₂,-HNOC-CR⁵=CH₂, and -HN-CH₂-CR⁵=CH₂. R⁴ represents an alkylene group having from 1 to 5 carbon atoms. R⁵ represents hydrogen or a methyl group. R¹ to R³ may be the same or different.)

Since the foregoing compound contains boron and the boron atom has a large atomic radius, a crosslinking effect becomes large so that it is possible to further improve the mechanical strength and heat resistance of the resulting molded article. Also, since the compatibility with the resin is good, the molding properties are not lowered. Further, since the foregoing compound itself has an effect as a flame retardant assistant, it can be especially suitably used in the invention.

According to a more preferred embodiment of the resin molded article for electric part and the production process of the same of the invention, it is preferable that the foregoing reinforcing fiber is contained in an amount of from 5 to 40 % by weight based on the whole of the foregoing resin composition and that the foregoing reinforcing fiber is a glass fiber the surface of which has been treated with a resin. By containing the reinforcing fiber, it is possible to improve tensile, compression, bending and impact strengths and other mechanical strengths, and further, it is possible to prevent a lowering of physical properties against water or the temperature. Also, since the glass fiber the surface of which has been previously treated with a resin is used, adhesion to the thermoplastic polymer is improved.

According to a more preferred embodiment of the resin molded article for electric part and the production process of the same of the invention, it is preferable that the foregoing inorganic filler is contained in an amount of from 1 to 15 % by weight based on the whole of the foregoing resin composition. In this way, not only the mechanical strength of the molded article can be kept so that the dimensional stability is improved, but also it is possible to prevent the generation of cracks and the like caused by the matter that the resin molded article becomes brittle due to excessive containing.

According to a more preferred embodiment of the resin molded article for electric part and the production process of the same of the invention, it is preferable that stratiform clay having a silicate layer laminated therein is contained as the foregoing inorganic filler and that the foregoing stratiform clay is contained in an amount of from 1 to 10 % by weight based on the whole of the foregoing resin composition. In this way, when the stratiform clay is dispersed at the nano-order level in the resin, a hybrid structure with the resin is formed. In this way, the heat resistance and mechanical strength and the like of the resulting flame retardant resin processed article are improved.

According to a more preferred embodiment of the resin molded article for electric part and the production process of the same of the invention, it is preferable that the foregoing resin composition contains a flame retarder and that the subject flame retarder is contained in an amount of from 2 to 35 % by weight based on the whole of the foregoing resin composition. By making the content fall within the foregoing range, not only the flame retardancy can be improved, but also bleed-out and failure of crosslinking due to the excessive addition can be prevented, whereby when used as an electromagnetic switch, it is possible to prevent a lowering of the durability or electric characteristics or the like.

According to a more preferred embodiment of the resin molded article for electric part and the production process of the same of the invention, it is preferable that a monofunctional organophosphorus compound containing one unsaturated group in the end thereof is contained as the foregoing flame retarder. In this way, since the flame retarder reacts with and bonds to the resin, it is possible to prevent bleed-out of the flame retarder, whereby deterioration with time of the flame retardant effect can be prevented. Also, even when the addition amount is small, it is possible to obtain a high flame retardant effect.

According to a more preferred embodiment of the resin molded article for electric part and the production process of the same of the invention, it is preferable that the foregoing electric part is used for an electromagnetic switch. In an electromagnetic switch, for example, for the sake of supporting a contact, a resin molded article is used. The resin molded article is required to have high strength, heat resistance, flame retardancy, and dimensional stability and the like such that it is durable against heat generated in the contact and a repeated action of the contact, and therefore, the resin molded article and the production process of the same of the invention are especially effective.

### BRIEF DESCRIPTION OF THE DRAWINGS

Fig. 1 is a photograph in which the appearance state after the test for resistance to soldering heat in the Examples is compared.
Fig. 2 is a graph showing the results of the heat resistance test in the Examples.

### BEST MODE FOR CARRYING OUT THE INVENTION

The invention will be hereunder described in detail.

The resin molded article for electric part of the invention is one resulting from molding and solidifying a resin composition containing a thermoplastic polymer, a crosslinking agent comprising a polyfunctional monomer or oligomer containing an unsaturated group in ends of the major skeleton, an inorganic filler, and a reinforcing fiber and then crosslinking the foregoing thermoplastic polymer by heating or radiations.

First of all, the thermoplastic polymer which constitutes the resin composition of the invention will be described.

The thermoplastic polymer which is used in the invention is not particularly limited, and examples thereof include polyamide based resins, polyester based resins such as polybutylene terephthalate and polyethylene terephthalate, polyacrylic resins, polyimide based resins, polycarbonate resins, polyurethane based resins, polystyrene based resins such as polystyrene, an acrylonitrile-styrene copolymer, and an acrylonitrile-butadiene-styrene copolymer, polyacetal based resins, polyolefin based resins, polyphenylene oxide, polyphenylene sulfide, and polybutadiene. Above all, it is preferred to use a polyamide based resin or polybutylene terephthalate from the standpoints of abrasion resistance and heat resistance and the like.

The polyamide based resin is not particularly limited so far as it is an amide bond-containing polymer made of an aminocarboxylic acid, a lactam or a diamine, and a dicarboxylic acid, etc. as the major raw materials. For example, aliphatic polyamides such as polyamide 6, polyamide 11, polyamide 12, polyamide 4-6, polyamide 6-6, polyamide 6-10, and polyamide 6-12 may be used; and also, aromatic-containing polyamides such as polyamide MXD6 may be used. Further, two kinds of polyamides selected from these groups can be properly used as a blend or an alloy and are not limited properly.

Also, the polyamide based resin is not limited to the foregoing homopolymers and may be a copolymer made of at least two kinds of the foregoing homopolymers, for example, polyamide 6 and polyamide 66 (polyamide 6/6), and polyamide 6 and polyamide 12 (polyamide 6/12).

Further, in the invention, the polyamide may be a modified polyamide copolymer. Examples of the modified polyamide copolymer include polyamides modified with a phenol derivative, a melamine derivative, a glycidyl derivative, and a vinyl group-containing compound polyamides resulting from graft polymerization with a polyester based modified polymer, and polyamides modified with a phthalic acid such as terephthalic acid.

Next, the crosslinking agent which is used in the invention will be described. As the crosslinking agent in the invention, a crosslinking agent comprising a polyfunctional monomer or oligomer containing an unsaturated group in ends of the major skeleton is used.

Examples of such a crosslinking agent include bifunctional to tetrafunctional compounds represented by the following general formulae (a) to (c). Here, X represents the major skeleton; R⁶ to R⁹ each represents a functional group containing an unsaturated group in the end thereof; (a) represents a bifunctional compound; (b) represents a trifunctional compound; and (c) represents a tetrafunctional compound.

R⁶-X-R⁷ (a)

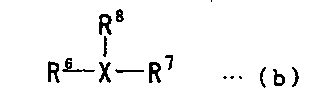

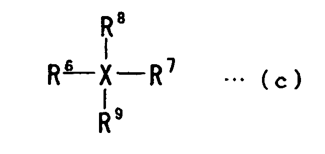

Concretely, there are enumerated structures represented by the following general formulae wherein the major skeleton X represents an aliphatic alkyl such as glycerin and pentaerythritol derivatives, an aromatic ring such as trimellitic, pyromellitic, tetrahydrofuran, symmetric triazine, isocyanuric, cyanuric and trimethylenetrioxane rings, or a bisphenol.

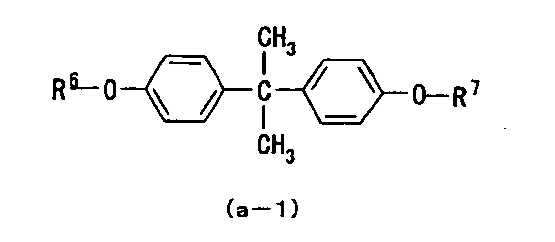

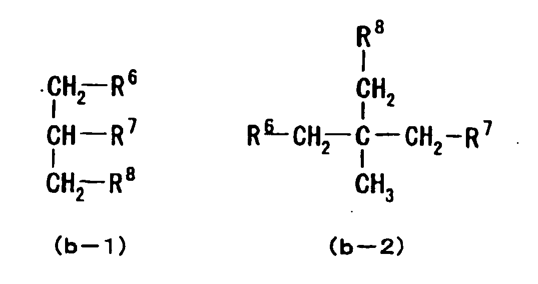

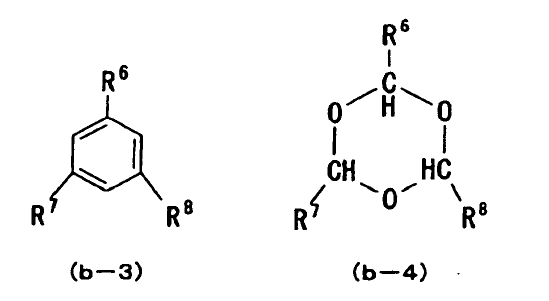

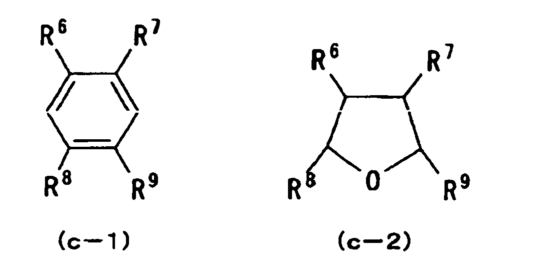

Also, in the case where the thermoplastic polymer is a polyamide based resin, it is preferably an N element-containing cyclic compound wherein the major skeleton X represents an isocyanuric ring, or a cyanuric ring. In this way, since the compatibility of the amide bond with the N element is more enhanced, the compatibility with the polyamide based resin is more improved. Also, since this compound is an N element-containing cyclic compound, the flame retardancy is improved at the same time. Therefore, this compound is preferable.

As the functional group containing an unsaturated group in the end thereof as represented by R⁶ to R⁹, a group selected from -O-R⁴-CR⁵=CH₂, -R⁴-OOC-CR⁵=CH₂, -R⁴-CR⁵=CH₂, -HNOC-CR⁵=CH₂, and -HN-CH₂-CR⁵=CH₂ is chosen. Here, R⁴ represents an alkylene group having from 1 to 5 carbon atoms; R⁵ represents hydrogen or a methyl group; and R⁶ to R⁹ may be the same or different.

Concretely, there are numerated diacrylates, dimethacrylates, diallylates, triacrylates, trimethacrylates, triallylates, tetraacrylates, tetramethacrylates, and tetraallylates. Acrylates such as diacrylates, triacrylates, and tetraacrylates are more preferable in view of the reactivity.

With respect to specific examples of the foregoing crosslinking agent, examples of the bifunctional monomer or oligomer include diacrylates such as bisphenol F-EO-modified diacrylate, bisphenol A-EO-modified diacrylate, isocyanuric acid EO-modified diacrylate, tripropylene glycol diacrylate, polypropylene glycol diacrylate, polyethylene glycol diacrylate, and pentaerythritol diacrylate monostearate, and dimethacrylates and diallylates thereof.

Also, examples of the trifunctional monomer or oligomer include triacrylates such as pentaerythritol triacrylate, trimethylolpropane triacrylate, trimethylolpropane PO-modified triacrylate, trimethylolpropane EO-modified triacrylate, and isocyanuric acid EO-modofied triacrylate, and trimethacrylates and triallylates thereof.

Also, examples of the tetrafunctional monomer or oligomer include ditrimethylolpropane tetraacrylate and pentaerythritol tetraacrylate.

The foregoing compound is obtained by reacting one member which becomes the major skeleton X and which is selected from trimellitic acid, pyromellitic acid, tetrahydrofuran-tetracarboxylic acid, 1,3,5-trihydroxybenzene, glycerin, pentaerythritol, N,N',N"-triallylisocyanurate, 2,4,6-tris-(chloromethyl)-1,3,5-trioxane, and so on, with one member which becomes the functional group containing an unsaturated group in the end thereof and which is selected from ally bromide, allyl alcohol, allylamine, methallyl bromide, methallyl alcohol, and methallylamine.

Further, as the crosslinking agent which is used in the invention, a trifunctional compound represented by the following general formula (I) is preferably used.

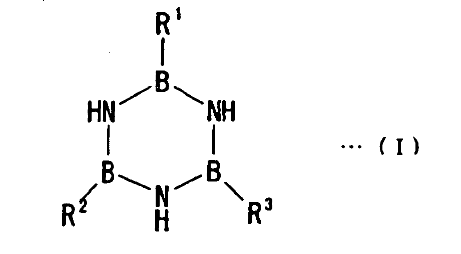

In the formula (I), R¹ to R³ are the same as in the foregoing R⁶ to R⁹ and each represents a group selected from -O-R⁴-CR⁵=CH₂, -R⁴-OOC-CR⁵=CH₂, -R⁴-CR⁵=CH₂, -HNOC-CR⁵=CH₂, and -HN-CH₂-CR⁵=CH₂. R⁴ represents an alkylene group having from 1 to 5 carbon atoms, and R⁵ represents hydrogen or a methyl group. R¹ to R³ may be the same or different.

Since the foregoing compound contains boron and the boron atom has a large atomic radius, a crosslinking effect becomes large so that it is possible to further improve the mechanical strength and heat resistance of the resulting molded article. Also, since the compatibility with the resin is good, the molding properties are not lowered. Further, since the foregoing compound itself has an effect as a flame retardant assistant, it can be especially suitably used in the invention.

Examples of the compound represented by the foregoing general formula (I) include the following compounds (I-1) to (I-6).

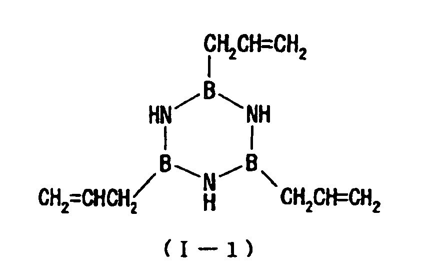

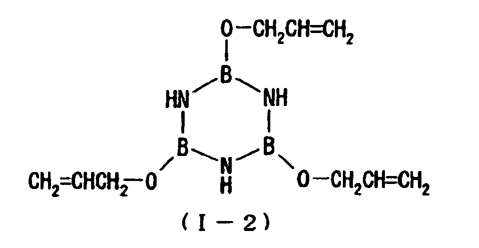

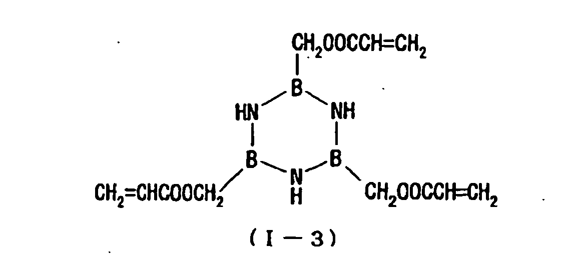

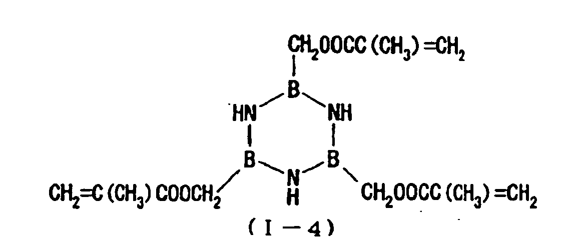

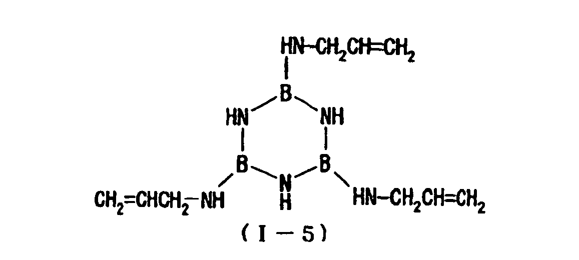

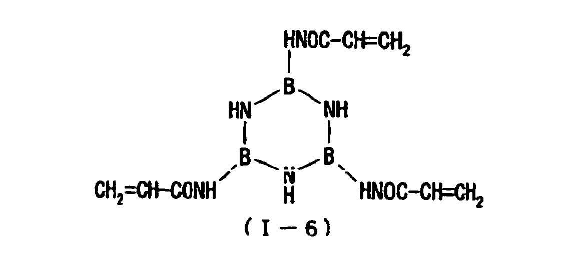

Incidentally, the compound represented by the foregoing general formula (I) is obtained by reacting trichloroborazine with one member which becomes the functional group containing an unsaturated group in the end thereof and which is selected from ally bromide, allyl alcohol, allylamine, methallyl bromide, methallyl alcohol, and methallylamine.

Though the foregoing crosslinking agent may be used singly, it is more preferred to use the plurality number of the crosslinking agents in combination for the sake of controlling the reactivity. Above all, it is preferred to use two or more kinds of trifunctional crosslinking agents in combination; and it is more preferred to use a bifunctional crosslinking agent and a trifunctional crosslinking agent in combination. In this way, since a network structure can be successively formed while suppressing the crosslinking reaction by the bifunctional crosslinking agent, it is possible to more control the shrinkage of the resin molded article due to the crosslinking.

With respect to the content of the crosslinking agent, the foregoing crosslinking agent is preferably contained in an amount of from 0.5 to 10 parts by weight, and more preferably from 1.0 to 7.0 parts by weight based on 100 parts by weight of the foregoing thermoplastic polymer. When the content is less than 0.5 parts by weight, the crosslinking is not sufficient, and the resulting resin molded article is not preferable with respect to mechanical physical properties, thermal physical properties, and electrical physical properties. Also, when it exceeds 10 parts by weight, the crosslinking agent becomes excessive, an unreacted monomer or a decomposed gas of the crosslinking agent is generated, bleed-out of an oligomerized material takes place, thereby causing metallic staining of electrodes, etc. during using in electromagnetic switches, etc., or attachment takes place at the time of driving, thereby likely causing an erroneous actuation. Further, mechanical characteristics such as abrasion resistance are lowered, or a dimensional change is caused. Therefore, such is not preferable.

Next, the resin molded article of the invention contains an inorganic filler. In this way, not only the mechanical strength of the molded article is improved, but also the dimensional stability can be improved. Also, the inorganic filler becomes a substrate for adsorbing the crosslinking agent, thereby making dispersion of the crosslinking agent uniform.

As the inorganic filler, conventionally known materials can be used. Representative examples thereof include powders of a metal such as copper, iron, nickel, zinc, tin, stainless steel, aluminum, gold, and silver, fumed silica, aluminum silicate, calcium silicate, silicic acid, hydrated calcium silicate, hydrated aluminum silicate, glass beads, carbon black, a quartz powder, mica, talc, clay, mica, titanium oxide, iron oxide, zinc oxide, calcium carbonate, magnesium carbonate, magnesium oxide, calcium oxide, magnesium sulfate, potassium titanate, and diatomaceous earth. Above all, it is especially preferred to use a porous material; and concretely, it is preferred to use talc, clay, and calcium carbonate.

Incidentally, these fillers may be used singly or in combinations of two or more kinds thereof. Also, the filler may be a material the surface of which has been treated with a known surface treating agent.

With respect to the content of the inorganic filler, the inorganic filler is preferably contained in an amount of from 1 to 15 % by weight, and more preferably from 2 to 10 % by weight based on the whole of the resin composition. When the content is less than 1 % by weight, not only the mechanical strength of the resin molded article is lowered and the dimensional stability is not sufficient, but also adsorption of the crosslinking agent becomes insufficient. Accordingly, such is not preferable. Also, when it exceeds 15 % by weight, the resin molded article becomes brittle, and therefore, such is not preferable.

Of the foregoing inorganic fillers, it is especially preferred to use stratiform clay having a silicate layer laminated therein. The stratiform clay having a silicate layer laminated therein as referred to herein is clay having a structure in which a silicate layer having a thickness of about 1 nm and a length of one side of about 100 nm is laminated. Accordingly, when this stratiform clay is dispersed at the nano-order level in the resin, a hybrid structure with the resin is formed, whereby the heat resistance and mechanical strength and the like of the resulting resin processed article are improved. A mean particle size of the stratiform clay is preferably not more than 100 nm.

As the stratiform clay, though there are enumerated montmorillonite, kaolinite and mica, montmorillonite is preferable because of its excellent dispersibility. Also, the stratiform clay may be subjected to a surface treatment for the purpose of improving the dispersibility into the resin. As such stratiform clay, commercially available products may be used, and for example, "NANOMER" (a trade name, manufactured by Nisshoiwai Bentonite Co., Ltd.) and the like can be used.

The content of the stratiform clay is preferably from 1 to 10 % by weight based on the whole of the resin composition. Incidentally, the stratiform clay may be used alone or used together with other inorganic filler.

Next, the resin molded article of the invention contains a reinforcing fiber. By this, not only the mechanical strength of the molded article can be improved, but also the dimensional stability can be improved, too.

As the reinforcing fiber, though all of a glass fiber, a carbon fiber, and a metallic fiber can be used, it is preferred to use a glass fiber from the standpoints of strength and adhesion to the thermoplastic polymer or inorganic filler.

Also, it is preferable that the glass fiber is subjected to a surface treatment and further coated with a resin. In this way, the adhesion to the thermoplastic polymer can be further improved.

As a surface treating agent, known silane coupling agents can be used. Specific examples thereof include silane coupling agents containing at least one alkoxy group selected from the group consisting of a methoxy group and an ethoxy group and at least one reactive functional group selected from the group consisting of an amino group, a vinyl group, an acrylic group, a methacrylic group, an epoxy group, a mercapto group, a halogen atom, and an isocyanate group.

Also, a coating resin is not particularly limited, and urethane resins, epoxy resins, and the like can be enumerated.

With respect to the blending amount of the reinforcing fiber, the reinforcing fiber is preferably contained in an amount of from 5 to 40 % by weight, and more preferably from 15 to 30 % by weight based on the whole of the resin composition. When the content is less than 5 % by weight, not only the mechanical strength of the resin molded article is lowered, but also the dimensional stability becomes insufficient, and therefore, such is not preferable. Also, when it exceeds 40 % by weight, molding becomes difficult, and therefore, such is not preferable.

Further, it is preferred to contain a flame retarder in the resin composition of the invention.

As the flame retarder, though conventionally known flame retarders can be used without particular limitations, halogen based flame retarders containing a halogen atom such as bromine in the molecule thereof, phosphorus based flame retarders containing a phosphorus element in the molecule thereof, derivatives of cyanuric acid or isocyanuric acid, melamine derivatives, and so on can be preferably used. It is preferred to use a halogen based flame retarder from the standpoint of preventing decomposition of the flame retarder due to irradiation with radiations.

Examples of the halogen based flame retarder include brominated polystyrene, brominated polyphenylene ether, brominated polycarbonate, and brominated epoxy.

On the other hand, examples of the phosphorus based flame retarder include monophosphoric esters such as triphenyl phosphate and tricresyl phosphate, condensed phosphoric esters such as bisphenol A bis(diphenyl) phosphate and resorcinol bis(diphenyl) phosphate, ammonium polyphosphate, polyphosphoric amide, red phosphorus, and guanidine phosphate. These flame retarders may be used singly or in combinations of two or more kinds thereof.

Of the foregoing phosphorus based flame retarders, it is especially preferable that a monofunctional organophosphorus compound containing one unsaturated group in the end thereof is contained. In this way, since the unsaturated group in the end thereof reacts with and bonds to the resin, it is possible to prevent bleed-out of the flame retarder, whereby deterioration with time of the flame retardant effect can be prevented. Also, even when the addition amount is small, it is possible to obtain a high flame retardant effect. Such a compound is not particularly limited and for example, includes a compound (II) represented by the following structural formula.

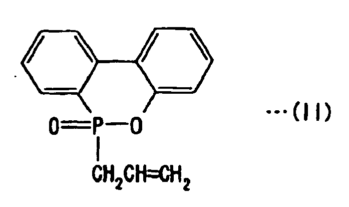

Incidentally, the foregoing compound (II) is known, and for example, one which is commercially available as a trade name (ACA) from Sanko Chemical Co., Ltd. can be used.

With respect to the blending amount of the flame retarder, the flame retarder is preferably contained in an amount of from 2 to 35 % by weight based on the whole of the resin composition. When the content is less than 2 % by weight, the flame retardancy becomes insufficient, and therefore, such is not preferable. When it exceeds 35 % by weight, bleed-out and failure of crosslinking are generated due to the excessive addition, whereby when used as an electromagnetic switch, the durability or electric characteristics are lowered, and therefore, such is not preferable. Also, since the crosslinking density is lowered, the heat resistance is deteriorated and the rate of dimensional change becomes large, and therefore, such is not preferable.

Incidentally, in the resin composition of the invention, in addition to the foregoing components, various commonly used addition components, for example, additives such as crystal nucleating agents, coloring agents, antioxidants, releasing agents, plasticizers, heat stabilizers, lubricants, and ultraviolet light preventives can be added within the range where the heat resistance, weather resistance and impact resistance as targeted in the invention are not hindered.

Though the coloring agent is not particularly limited, ones which do not cause discoloration due to irradiation with radiations are preferable. For example, inorganic pigments such as iron red oxide, black iron oxide, carbon, and chrome yellow and metal complexes such as phthalocyanines are preferably used.

Next, the production process of the invention will be described.

First of all, an adsorbing step for adsorbing a crosslinking agent comprising a polyfunctional monomer or oligomer containing an unsaturated group in ends of the major skeleton onto an inorganic filler is performed. In the light of the above, the production process of the invention is characterized by previously adsorbing the crosslinking agent onto the inorganic filler. In this way, dispersion of the crosslinking agent is performed very uniformly, and physical properties of the resulting resin molded article become uniform, whereby it is possible to obtain a resin molded article which is excellent in all of heat resistance, mechanical characteristics, electric characteristics, dimensional stability, flame retardancy, and molding properties.

Next, a kneading step for kneading a resin composition containing the inorganic filler after the adsorption, a thermoplastic polymer, and a reinforcing fiber is performed. The mixing can be performed by a conventionally known mixer or blender or the like which is used for usual mixing. Also, the melt kneading can be performed by using a usual melt kneading processing machine such as a single-screw or twin-screw extruder, a Banbury mixer, a kneader, and a mixing roll. Though the kneading temperature can be properly chosen depending upon the kind of the thermoplastic polymer, for example, in the case of a polyamide based resin, it is preferred to perform kneading at from 240 to 270 °C. Also, it is preferable that the resin composition after kneading is pelletized for drying.

Next, the foregoing pellet is subjected to injection molding to obtain a molded article. In molding, a conventionally known injection molding method can be employed, and a usual injection condition for thermoplastic resin can be employed. Though the injection condition can be properly chosen depending upon the kind of the thermoplastic polymer to be used, for example, in the case of a polyamide based resin, the cylinder temperature and the mold temperature are preferably from 260 to 330 °C and from 60 to 130 °C, respectively. Incidentally, since crosslinking does not proceed at all at this stage, a spool portion that is excessive at the time of molding can be recycled as the thermoplastic resin.

Next, in the production process of the invention, after the injection step, the molded article is crosslinked by heating or upon irradiation with radiations in a mold or after taking out from a mold.

In the case where the crosslinking is performed upon irradiation with radiations, electron beams, α-rays, γ-rays, X-rays, ultraviolet light, and so on can be applied. Incidentally, the radiations as referred to in the invention mean radiations in the broad sense and specifically mean electromagnetic waves such as X-rays and ultraviolet light in addition to corpuscular rays such as electron beams and α-rays. Above all, it is preferable that the crosslinking is performed upon irradiation with electron beams or γ-rays. For the irradiation with electron beams, a known electron accelerator or the like can be used. Accelerating energy is preferably 2.5 MeV or more.

For the irradiation with γ-rays, a known irradiation unit by a cobalt 60 radiation source can be used. Since the γ-rays are stronger in permeability than electron beams, they can uniformly irradiate the molded article and hence, are especially preferable. However, since the irradiation intensity is strong, it is necessary to control the dosage for the purpose of preventing excessive irradiation.

The irradiation dosage of radiations is preferably 10 kGy or more, more preferably from 10 to 45 kGy, and especially preferably from 15 to 40 kGy. When the irradiation dosage falls within this range, a resin molded article which is excellent in the foregoing physical properties is obtained by crosslinking. When the irradiation dosage is less than 10 kGy, the formation of a three-dimensional network structure by the crosslinking becomes heterogeneous and the unreacted crosslinking agent causes bleed-out, and therefore, such is not preferable. When it exceeds 45 kGy, an internal strain caused due to an oxidation decomposition product remains in the resin composition, thereby generating deformation or shrinkage or the like, and therefore, such is not preferable.

In the case where the crosslinking is performed by heating, the reaction temperature is preferably at least 5 °C, and preferably at least 10 °C higher than the molding temperature of the resin.

The thus obtained molded article for electric part of the invention is more excellent in heat resistance and flame retardancy than conventional single thermoplastic resin molded articles. Therefore, it can be suitably used as electric parts which are required to have high heat resistance and flame retardancy, for example, members for supporting a contact and housings of electromagnetic switches, various sensors, housings of electronic devices, and sealing materials.

### EXAMPLES

The invention will be hereunder described in more detail with reference to the Examples, but it should not be construed that the invention is limited to these Examples.

### Example 1

In a system containing a mixture of 4.5 parts by weight of talc having a mean particle size of 2 µm as an inorganic filler and 1.0 part by weight of black iron oxide having a mean particle size of 1 to 2 µm as a coloring agent, 3.3 parts by weight of isocyanuric acid EO-modified triacrylate (M-315, manufactured by Toagosei Co., Ltd.) which is a trifunctional compound containing an unsaturated double bond in ends thereof was added in a liquid state as a crosslinking agent and adsorbed on the surface of the system, thereby obtaining an adsorbed material.

Next, 65.8 parts by weight of a copolymer of 66/6 nylon (2123B, manufactured by Ube Industries, Ltd.) as a thermoplastic polymer, 25.0 parts by weight of a glass fiber processed by subjecting to a surface treatment with a silane coupling agent and then coating with a urethane resin as a reinforcing fiber, and 0.4 parts by weight of an antioxidant (IRGANOX 1010, manufactured by Ciba-Geigy AG) were added to and mixed with the foregoing adsorbed material, thereby obtaining a resin composition.

The foregoing resin composition was kneaded at 240 °C using a side flow type twin-screw extruder and then dried at 105 °C for 4 hours, thereby obtaining a pellet.

The foregoing pellet was subjected to injection molding using an injection molding machine (α50C, manufactured by FUNUC LTD.) under conditions at a cylinder temperature of 270 °C, a mold temperature of 80 °C, an injection pressure of 800 kg·F/cm² and an injection rate of 120 mm/sec for a cooling time of 15 seconds, thereby obtaining a molded article.

The foregoing molded article was subjected to a crosslinking step upon irradiation of radiations of γ-rays using cobalt 60 as a radiation source at a dosage of 20 kGy, thereby obtaining a resin molded article of Example 1.

### Example 2

A pellet was obtained under the same conditions as in Example 1, except for using 3 parts of N,N',N"-triallyl isocyanurate as the crosslinking agent, using 66.1 parts by weight of a 66 nylon resin (2020B, manufactured by Ube Industries, Ltd.) as the thermoplastic polymer, and setting up the kneading temperature at 270 °C.

The injection molding and irradiation with radiations were performed under the same conditions as in Example 1, except for setting up the cylinder temperature at the time of injection molding at 280 °C and setting up the dosage of γ-rays for irradiation with radiations at 15 kGy, thereby obtaining a resin molded article of Example 2.

### Example 3

A pellet was obtained under the same conditions as in Example 2, except for using a combination of 2.0 parts of N,N',N"-triallyl isocyanurate and 1.0 part by weight of isocyanuric acid EO-modified triacrylate (M-315, manufactured by Toagosei Co., Ltd.) as the crosslinking agent. The injection molding and irradiation with radiations were performed under the same conditions as in Example 2, thereby obtaining a resin molded article of Example 3.

The injection molding and irradiation with radiations were performed under the same conditions as in Example 1, except for setting up the cylinder temperature at the time of injection molding at 280 °C and setting up the dosage of γ-rays for irradiation with radiations at 25 kGy, thereby obtaining a resin molded article of Example 3.

### Example 4

A pellet was obtained under the same conditions as in Example 2, except for using a combination of 2.5 part by weight of isocyanuric acid EO-modified triacrylate (M-315, manufactured by Toagosei Co., Ltd.) and 0.5 parts by weight of diallyl isocyanurate as the crosslinking agent. The injection molding and irradiation with radiations were performed under the same conditions as in Example 2, thereby obtaining a resin molded article of Example 4.

The injection molding and irradiation with radiations were performed under the same conditions as in Example 1, except for setting up the cylinder temperature at the time of injection molding at 280 °C and setting up the dosage of γ-rays for irradiation with radiations at 20 kGy, thereby obtaining a resin molded article of Example 4.

### Example 5

A pellet was obtained under the same conditions as in Example 2, except for further adding 25 parts by weight of a flame retarder composed of a combination of a brominated polystyrene based resin and antimony oxide in a weight ratio of 3/1 to 100 parts by weight of the resin composition of Example 2.

The injection molding and irradiation with radiations were performed under the same conditions as in Example 1, except for setting up the cylinder temperature at the time of injection molding at 280 °C and setting up the dosage of γ-rays for irradiation with radiations at 20 kGy, thereby obtaining a resin molded article of Example 5.

### Example 6

A pellet was obtained under the same conditions as in Example 2, except for further adding 10 parts by weight of a non-halogen based flame retarder which is a phosphoric ester based compound to 100 parts by weight of the resin composition of Example 3.

The injection molding was performed under the same conditions as in Example 1, except for setting up the cylinder temperature at the time of injection molding at 280 °C. Thereafter, the injection molded article was irradiated with radiations at a dosage of 25 kGy using a 3.5-MeV electron beam accelerator, thereby obtaining a resin molded article of Example 6.

### Example 7

A pellet was obtained under the same conditions as in Example 1, except for using a combination of isocyanuric acid EO-modified triacrylate (M-315, manufactured by Toagosei Co., Ltd.) which is a trifunctional compound containing an unsaturated double bond in ends thereof and 1.65 parts by weight of pentaerythritol trimethyl acrylate as the crosslinking agent, using 65.8 parts by weight of a PBT resin (TORAYCON 1401x06, manufactured by Toray Industries, Inc.) as the thermoplastic polymer, using 25.0 parts by weight of a glass fiber, the surface of which had been treated with an epoxy based silane coupling agent, as the reinforcing fiber, and further adding 25 parts by weight of a flame retarder composed of a combination of a brominated polystyrene based resin and antimony oxide in a weight ratio of 3/1.

The injection molding and irradiation with radiations were performed under the same conditions as in Example 1, except for setting up the cylinder temperature at the time of injection molding at 250 °C, thereby obtaining a resin molded article of Example 7.

### Example 8

A resin molded article of Example 8 was obtained under the same conditions as in Example 5, except that in Example 5, the addition amount of the flame retarder was changed to 40 parts by weight.

### Example 9

A resin molded article of Example 9 was obtained under the same conditions as in Example 5, except that in Example 5, 15 parts by weight of a non-halogen based flame retarder (a bisphenol A bis(diphenyl) phosphate based phosphoric ester base) was added as the flame retarder.

### Example 10

A pellet was obtained under the same conditions as in Example 1, except for using 6 parts by weight of the foregoing compound (I-1) as the crosslinking agent, using 66.1 parts by weight of a 66 nylon resin (2020B, manufactured by Ube Industries, Ltd.) as the thermoplastic polymer, and setting up the kneading temperature at 280 °C. The injection molding and irradiation with radiations were performed under the same conditions as in Example 1, except for setting up the cylinder temperature at the time of injection molding at 280 °C and setting up the dosage of γ-rays for irradiation with radiations at 30 kGy, thereby obtaining a resin molded article of Example 10.

### Example 11

20 parts by weight of brominated styrene (manufactured by Ferro Japan K.K.) and 8 parts by weight of antimony trioxide (manufactured by Nihon Seiko Company Limited) were further added as flame retarders to the composition of Example 10, thereby similarly obtaining a pellet. Thereafter, the injection molding and irradiation with radiations were performed under the same conditions as in Example 10, thereby obtaining a resin molded article of Example 11.

### Example 12

65.3 parts by weight of 66 nylon (2020B, manufactured by Ube Industries, Ltd.) as a thermoplastic resin, 20 parts by weight of a glass fiber having a fiber length of about 3 mm, the surface of which had been treated with a silane coupling agent (03.JAFT2Ak25, manufactured by Asahi Fiber Glass Co.) as a reinforcing fiber, 1 part by weight of carbon black as a coloring agent, 0.2 parts by weight of an antioxidant (IRGANOX 1010, manufactured by Ciba-Geigy AG), 5 parts by weight of talc having a mean particle size of 2 µm as an inorganic filler, 2.5 parts by weight of triallyl isocyanurate (TAIC, manufactured by Nippon Kasei Chemical Co, Ltd.) as a crosslinking agent, and 6 parts by weight of a phosphorus element-containing monofunctional compound (the foregoing compound (II): ACA, manufactured by Sanko Chemical Co., Ltd.) as a flame retarder were mixed and kneaded using a side flow type twin-screw extruder (manufactured by The Japan Steel Works, Ltd.) at 280 °C, thereby obtaining a resin pellet. After drying at 105 °C for 4 hours, the foregoing pellet was molded using an injection molding machine (α50C, manufactured by FUNUC LTD.) under conditions at a resin temperature of 280 °C and a mold temperature of 80 °C.

Thereafter, the foregoing molded article was irradiated with γ-rays using cobalt 60 as a radiation source at 25 kGy, thereby obtaining a resin molded article of Example 12.

### Example 13

A resin molded article of Example 13 was obtained in the same manner as in Example 12, except for changing the inorganic filler of Example 12 to 5 parts by weight of clay having a nano-order particle size and made of montmorillonite (NANOMER, manufactured by Nissho Iwai Corporation).

### Example 14

55.3 parts by weight of a polybutylene terephthalate resin (TORAYCON 1401X06, manufactured by Toray Industries, Inc.) as a thermoplastic resin, 20 parts by weight of the reinforcing fiber of Example 12, 5 parts by weight of the inorganic filler of Example 12, 0.5 parts by weight of the coloring agent of Example 12, 0.2 parts by weight of the antioxidant of Example 12, 3 parts by weight of the combination system of Example 3 as a crosslinking agent, and 9 parts by weight of a non-reactive organophosphorus based flame retarder (HCA-HQ, manufactured by Sanko Chemical Co., Ltd.) and 10 parts by weight of antimony oxide as flame retarders were kneaded at a kneading temperature of 245 °C, thereby obtaining a resin compound pellet. After drying at 130 °C for 3 hours, the pellet was molded under the same conditions as in Example 12, except for changing the cylinder temperature at the time of molding to 250 °C.

Thereafter, the foregoing molded article was irradiated with electron beams at an irradiation dosage of 40 kGy and at an accelerating voltage of 4.8 MeV using an accelerator manufactured by Sumitomo Heavy Industries, Ltd., thereby obtaining a resin molded article of Example 14.

### Example 15

A molded article was formed under the same conditions as in Example 2, except for further adding 3 parts by weight of a thermal catalyst (NOFMER BC, manufactured by NOF Corporation) to the system of Example 2.

Thereafter, the foregoing molded article was allowed to react by heating at 245 °C for 8 hours, thereby a resin molded article of Example 15.

### Comparative Example 1

A resin molded article of Comparative Example 1 was obtained under the same conditions as in Example 1, except for not subjecting the molded article to irradiation with radiations.

### Comparative Example 2

A resin composition was obtained under the same conditions as in Example 1, except that 4.5 parts by weight of talc having a mean particle size of 2 µm as the inorganic filler, 1.0 part by weight of black iron oxide having a mean particle size of 1 to 2 µm as the coloring agent, 11.3 parts by weight of N,N',N"-triallyl isocyanurate as the crosslinking agent, 57.8 parts by weight of a copolymer of 66/6 nylon (2123B, manufactured by Ube Industries, Ltd.) as the thermoplastic polymer, and 0.4 parts by weight of an antioxidant (IRGANOX 1010, manufactured by Ciba-Geigy AG) were simultaneously mixed, with which was then mixed and kneaded 25.0 parts by weight of a glass fiber having been subjected to a surface treatment with a silane coupling agent and then coated with a urethane resin as the reinforcing fiber, followed by injection molding and irradiation with radiations, thereby obtaining a resin molded article of Comparative Example 2.

### Comparative Example 3

A resin molded article of Comparative Example 3 was obtained under the same conditions as in Comparative Example 2, except for setting up the dosage of γ-rays at 50 kGy.

### Comparative Example 4

A pellet was obtained under the same conditions as in Example 2, except for using a thermal catalyst type resin modifier (NOFMER BC, manufactured by NOF Corporation) as a crosslinking agent, followed by injection molding. Thereafter, the molded article was crosslinked by heat reaction without irradiation with radiations, thereby obtaining a resin molded article of Comparative Example 4.

### Comparative Example 5

7.0 parts by weight of an inorganic filler (calcium carbonate) was previously subjected to an adsorption treatment with a combination of 1.0 part by weight of an epoxysilane functional silane (KBPS-402, manufactured by Shin-Etsu Chemical Co., Ltd.) and 1.0 part by weight of an amino functional silane (KBE-903, manufactured by Shin-Etsu Chemical Co., Ltd.) as a silane coupling agent.

This was further mixed with 91 parts by weight of a 66 nylon resin (LEONA FG172x61, manufactured by Asahi Kasei Corporation), and the mixture was pelletized using a twin-screw extruder set up at 270 °C.

This pellet was subjected to injection molding using the same injection molding machine used in the Examples under conditions at a cylinder temperature of 280 °C, a mold temperature of 85 °C, an injection rate of 800 kg·f/cm² and an injection rate of 100 mm/sec for a cooling time of 15 seconds, thereby obtaining a molded article. Further, for the purpose of strengthening the crosslinking, the molded article was heat treated at 250 °C for 15 minutes, thereby obtaining a resin molded article of Comparative Example 5.

### Comparative Example 6

A resin molded article of Comparative Example 6 was obtained under the same conditions as in Example 11, except for not adding the compound (I-1) which is a crosslinking agent to the composition of Example 11.

### Test Example 1

The resin molded articles of Examples 1 to 15 and Comparative Examples 1 to 6 were each used as a contact member for electromagnetic switch which is a representative example for electric part and evaluated with respect to the items shown in Table 1. The results obtained are summarized and shown in Tables 2 to 5.

**Table 1**

| Test item | Contents | Evaluation method |
|---|---|---|
| Molding properties | | There should be free from a problem due to thickening, sagging, etc. at the time of molding. |
| Appearance | | There should be free from a problem due to failure of appearance, etc. after molding. |
| Heat resistance | Test for resistance to soldering heat | Rate of dimensional change after dipping for 10 seconds in a soldering bath of 350 |
| | Heat decomposition temperature | Measured by DTA-TG (6200, manufactured by Seiko Instruments Inc.). |
| | Accelerated drive test | There should be free from abnormality at the time of drive of 2,000,000 times under an environment at 120 °C. |
| | Metallic staining test | A contact resistance after standing under an environment at 120 °C for 300 hours should be not more than 50 mΩ. |
| Durability | Environmental resistance test | A rate of dimensional change after standing under an environment at 50 and 95 % RH for 200 hours should be not more than 2 %. |
| Mechanical characteristics | MLT test | There should be free from failure of action, breakage, etc. by an ON/OFF actuation of 10,000,000 times. |
| | Young's modulus | Measured by a viscosity analyzer (US200, manufactured by Siebel Japan) (a value at 50 °C). |
| Electric characteristics | Overcurrent resistance | There should be free from melt, deformation, etc. in passing an electric current of 12 A x 8 In for 10 seconds. |
| | AC-4 test (JIS C8325-1983) | There should be free from a problem after repetition of passing and cutting of an electric current of 72 A for 10 seconds for 30,000 times. |
| Flame retardancy | According to glow wire test IEC | Measured by bringing a sample into vertical contact with the tip of a glow wire for 30 seconds under a press load of 0.8 to 1.2 N at a prescribed temperature. |
| | UL94 test | Evaluated by vertically installing a specimen (plate thickness: 1.5 mm), bringing into contact with a flame by a Bunsen burner for 10 seconds, and then recording a burning time. |

**Table 2**

| Test item | Contents | Example 1 | Example 2 | Example 3 | Example 4 | Example 5 |
|---|---|---|---|---|---|---|
| Molding properties | | Good | Good | Good | Good | Good |
| Appearance of molded article after crosslinking | | Good | Good | Good | Good | Good |
| Heat resistance | Test for resistance to soldering heat | Not more than 2 % | Not more than 2 % | Not more than 2 % | Not more than 2 % | Not more than 2 % |
| | Heat decomposition temperature | 374.8 °C | 379.5 °C | 378.3 °C | 378.1 °C | 395.2 °C |
| | Accelerated drive test | Neither deformed nor attached: passed | Neither deformed nor attached: passed | Neither deformed nor attached: passed | Neither deformed nor attached: passed | Neither deformed nor attached: passed |
| | Metallic staining test | Passed | Passed | Passed | Passed | Passed |
| Durability | | Free from deformation, attachment and dimensional change: passed | Free from deformation, attachment and dimensional change: passed | Free from deformation, attachment and dimensional change: passed | Free from deformation, attachment and dimensional change: passed | Free from deformation, attachment and dimensional change: passed |
| Mechanical characteristics | MLT test | Passed | Passed | Passed | Passed | Passed |
| | Young's modulus | 5.8 GPa | 6.3 GPa | 5.3 GPa | 5.7 GPa | 6.2 GPa |
| Electric characteristics | Overcurrent resistance | Passed | Passed | Passed | Passed | Passed |
| | AC-4 at 72 A | Passed | Passed | Passed | Passed | Passed |
| Flame retardancy | Glow wire test | 850 °C: passed | 850 °C: passed | 850 °C: passed | 850 °C: passed | 960 °C: passed |
| | UL test | HB | HB | HB | HB | V-0 |

**Table 3**

| Test item | Contents | Example 6 | Example 7 | Example 8 | Example 9 | Example 10 |
|---|---|---|---|---|---|---|
| Molding properties | | Good | Good | Good | Good | Good |
| Appearance of molded article after crosslinking | | Good | Good | Insufficiently crosslinked and bled | Slightly bled on the surface | Good |
| Heat resistance | Test for resistance to soldering heat | Not more than 2 % | Not more than 2 % | 8.5% | 5.3% | Not more than 2 % |
| | Heat decomposition temperature | 389.2 °C | 365.4 °C | 384.3 °C | 380.2 °C | 375.8 °C |
| | Accelerated drive test | Neither deformed nor attached: passed | Neither deformed nor attached: passed | Deformed and attached: not passed | Neither deformed nor attached: passed | Neither deformed nor attached: passed |
| | Metallic staining test | Passed | Passed | Not passed | Passed | Passed |
| Durability | | Free from deformation, attachment and dimensional change: passed | Free from deformation, attachment and dimensional change: passed | Adhered and bled: not passed | Bled: not passed | Free from deformation, attachment and dimensional change: passed |
| Mechanical characteristics | MLT test | Passed | Passed | Passed | Passed | Passed |
| | Young's modulus | 5.8 GPa | 4.8 GPa | 4.8 GPa | 5.8 GPa | 5.9 GPa |
| Electric characteristics | Overcurrent resistance | Passed | Passed | Not passed | Not passed | Passed |
| | AC-4 at 72 A | Passed | Passed | Passed | Passed | Passed |
| Flame retardancy | Glow wire test | 960 °C: passed | 850 °C: passed | 960 °C: passed | 960 °C: passed | 850 °C: passed |
| | UL test | V-1 | HB | V-0 | V-1 | HB |

**Table 4**

| Test item | Contents | Example 11 | Example 12 | Example 13 | Example 14 | Example 15 |
|---|---|---|---|---|---|---|
| Molding properties | | Good | Good | Good | Good | Good |
| Appearance of molded article after crosslinking | | Good | Good | Good | Good | Good |
| Heat resistance | Test for resistance to soldering heat | Not more than 2 % | Not more than 2 % | Not more than 2 % | Not more than 2 % | 5 % |
| | Heat decomposition temperature | 380.5 °C | 380.6 °C | 395.0 °C | 380.1 °C | 376.0 °C |
| | Accelerated drive test | Neither deformed nor attached: passed | Neither deformed nor attached: passed | Neither deformed nor attached: passed | Neither deformed nor attached: passed | Neither deformed nor attached: passed |
| | Metallic staining test | Passed | Passed | Passed | Passed | Passed |
| Durability | | Free from deformation, attachment and dimensional change: passed | Free from deformation, attachment and dimensional change: passed | Free from deformation, attachment and dimensional change: passed | Free from deformation, attachment and dimensional change: passed | Free from deformation, attachment and dimensional change: passed |
| Mechanical characteristics | MLT test | Passed | Passed | Passed | Passed | Passed |
| | Young's modulus | 6.5 GPa | 7.0 GPa | 7.8 GPa | 7.1 GPa | 6.5 GPa |
| Electric characteristics | Overcurrent resistance | Passed | Passed | Passed | Passed | Passed |
| | AC-4 at 72 A | Passed | Passed | Passed | Passed | Passed |
| Flame retardancy | Glow wire test | 960°C: passed | 850 °C: passed | 850 °C: passed | 850 °C: passed | 850 °C: passed |
| | UL test | V-0 | V-2 | V-1 | V-1 | HB |

**Table 5**

| Test item | Contents | Comparative Example 1 | Comparative Example 2 | Comparative Example 3 | Comparative Example 4 | Comparative Example 5 | Comparative Example 6 |
|---|---|---|---|---|---|---|---|
| Molding properties | | Good | Good | Good | Occurrence of thickening and failure of molding | Occurrence of thickening and failure of molding | Good |
| Appearance of molded article after crosslinking | | - | Curing and shrinkage and bleeding of unreacted material | Curing and shrinkage and deterioration of surface | Deformed at the time of curing | Deformed at the time of curing | - |
| Heat resistance | Test for resistance to soldering heat | Deformed just after dipping | 6.5% | 3.1% | 7.2% | 5.5% | - |
| | Heat decomposition temperature | 358.7 °C | 372.0 °C | 374.4 °C | 358.2 °C | 368.7 °C | 378.1 °C |
| | Accelerated drive test | Largely deformed and attached: not passed | Largely deformed and attached: not passed | Largely deformed and attached: not passed | Deformed and attached: not passed | Deformed and attached: not passed | Neither deformed nor attached: passed |
| | Metallic staining test | Not passed | Not passed | Not passed | Not passed | Passed | Passed |
| Durability | | Adhered and bled: not passed | Adhered and bled: not passed | Adhered: not passed | Adhered and bled: not passed | Deformed: not passed | Occurrence of deformation, attachment and dimensional change: not passed |
| Mechanical characteristics | MLT test | Not passed | Not passed | Passed | Not passed | Not passed | Not passed |
| | Young's modulus | 3.1 GPa | 4.9 GPa | 5.9 GPa | 4.8 GPa | 5.2 GPa | 4.8 GPa |
| Electric characteristics | Overcurrent resistance | Not passed | Not passed | Passed | Not passed | Not passed | Not passed |
| | AC-4 at 72 A | Not passed | Not passed | Passed | Not passed | Not passed | Not passed |
| Flame retardancy | Glow wire test | 850 °C: not passed | 850 °C: not passed | 850 °C: passed | 850 °C: not passed | 960 °C: passed | 960 °C: not passed |
| | UL test | ≤ HB | HB | HB | HB | V-0 | V-1 |

From the results of Tables 2 to 5, the resin molded articles of Examples 1 to 7 and 10 to 15 are excellent in all of molding properties, appearance, heat resistance, durability, mechanical characteristics, electric characteristics, and flame retardancy.

Incidentally, in Example 8 in which the content of the flame retarder exceeds the preferred range of the invention and Example 9 in which a phosphorus based flame retarder is used as the flame retarder, it is noted that bleeding of the flame retarder occurs, whereby the evaluations of overcurrent resistance and metallic staining test and so on are lowered.

On the other hand, Comparative Example 1 in which crosslinking with radiations is not performed, Comparative Example 2 in which the inorganic filler, the crosslinking agent, and the thermoplastic polymer are kneaded without performing the adsorbing step, Comparative Example 3 in which in Comparative Example 2, the irradiation amount of radiations exceeds the preferred range of the invention, Comparative Example 4 in which a crosslinking agent capable of undergoing crosslinking by heating is used, Comparative Example 5 in which a silane coupling agent is used as the crosslinking agent, and Comparative Example 6 in which the crosslinking agent is not added are inferior to Examples 1 to 7 and 10 to 15 with respect to any one item of the molding properties, appearance, heat resistance, durability, mechanical characteristics, electric characteristics, and flame retardancy.

### Test Example 2

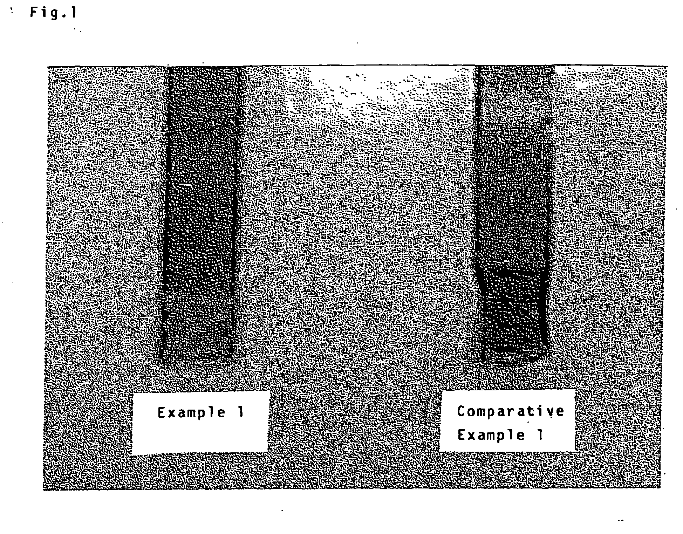

With respect to the resin molded articles of Example 1 and Comparative Example 1, the state resulting from comparison of the appearance after the test for resistance to soldering heat is shown in Fig. 1.

It is noted from Fig. 1 that in Example 1 in which crosslinking is performed upon irradiation with radiations, deformation or the like is not observed, whereas in Comparative Example 1 in which crosslinking is not performed without irradiation with radiations, remarkable heat deformation is generated.

### Test Example 3

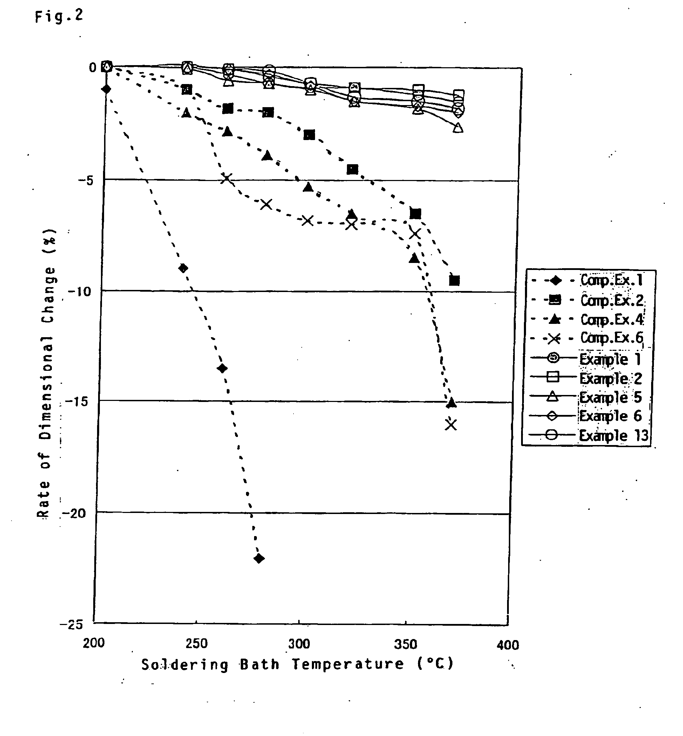

With respect to the resin molded articles of Examples 1, 2, 5, 6 and 13 and Comparative Examples 1, 2, 4 and 6, a change of the rate of dimensional change (dipping for 10 seconds) due to the temperature of a soldering bath was measured. The results are shown in Fig. 2.

From the results of test for resistance to soldering heat of Fig. 2, it is noted that in the Examples, the rate of dimensional change is small such that it falls within 5 % at all of the soldering bath temperatures, whereas in the Comparative Examples, it is largely lowered.

### INDUSTRIAL APPLICABLITY

As described previously, according to the invention, it is possible to provide a resin molded article for electric part which is excellent in heat resistance, mechanical characteristics, electric characteristics, dimensional stability, flame retardancy, and molding properties. Accordingly, this resin molded article can be suitably used especially as a member for supporting a contact of electromagnetic switch, and a housing.

## Claims

1. A resin molded article for electric part, which is **characterized by** one resulting from molding and solidifying a resin composition containing a thermoplastic polymer, a crosslinking agent comprising a polyfunctional monomer or oligomer containing an unsaturated group in ends of the major skeleton, an inorganic filler, and a reinforcing fiber and then crosslinking said thermoplastic polymer by heating or radiations and wherein said crosslinking agent comprises at least a trifunctional crosslinking agent and is absorbed to said inorganic filler, with the content of said crosslinking agent being from 0.5 to 10 parts by weight based on 100 parts by weight of said thermoplastic polymer.

2. The resin molded article for electric part according to claim 1, wherein two or more kinds of said polyfunctional crosslinking agent are used in combination as said crosslinking agent.

3. The resin molded article for electric part according to any one of claims 1 to 2, wherein said thermoplastic polymer is a polyamide based resin, and the major skeleton of said crosslinking agent is an N element-containing cyclic compound.

4. The resin molded article for electric part according to any one of claims 1 to 3, wherein said crosslinking agent is a compound represented by the following general formula (I): 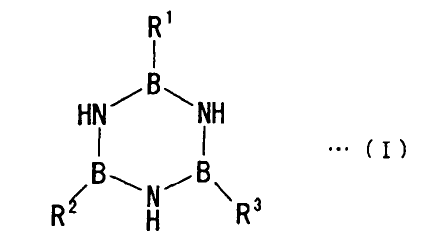 wherein R¹ to R³ each represents a group selected from -OR⁴-CR⁵=CH₂, -R⁴-OOC-CR⁵=CH₂, -R⁴-CR⁵=CH₂, -HNOC-CR⁵=CH₂, and -HN-CH₂-CR⁵=CH₂; R⁴ represents an alkylene group having from 1 to 5 carbon atoms; R⁵ represents hydrogen or a methyl group; and R¹ to R³ may be the same or different.

5. The resin molded article for electric part according to any one of claims 1 to 4, wherein said reinforcing fiber is contained in an amount of from 5 to 40 % by weight based the whole of said resin composition, and said reinforcing fiber is a glass fiber the surface of which has been treated with a resin.

6. The resin molded article for electric part according to any one of claims 1 to 5, wherein said inorganic filler is contained in an amount of from 1 to 15 % by weight based on the whole of said resin composition.

7. The resin molded article for electric part according to claim 6, wherein stratiform clay having a silicate layer laminated therein is contained as said inorganic filler, and said stratiform clay is contained in an amount of from 1 to 10 % by weight based on the whole of said resin composition.

8. The resin molded article for electric part according to any one of claims 1 to 7, wherein said resin composition contains a flame retarder, and said flame retarder is contained in an amount of from 2 to 35 % by weight based on the whole of said resin composition.

9. The resin molded article for electric part according to claim 8, wherein a monofunctional organophosphorus compound containing one unsaturated group in the end thereof is contained as said flame retarder.

10. The resin molded article for electric part according to any one of claims 1 to 9, wherein said electric part is an electromagnetic switch.

11. A production process of a resin molded article for electric part, which is **characterized by** including an adsorbing step for adsorbing a crosslinking agent comprising a polyfunctional monomer or oligomer containing an unsaturated group in ends of the major skeleton and at least a trifunctional crosslinking agent onto an inorganic filler; a kneading step for kneading a resin composition containing the inorganic filler after the adsorption, a thermoplastic polymer, and a reinforcing fiber; a step for injecting molding said kneaded resin composition; and a crosslinking step for taking out said resin composition after the injection step from a mold and heating it or irradiating it with radiations.

12. The production process of a resin molded article for electric part according to claim 11, wherein electron beams or γ-rays having a dosage of 10 kGy or more are irradiated for the irradiation with radiations in said crosslinking step.

13. The production process of a resin molded article for electric part according to claim 11, wherein the heating is performed at a temperature of at least 5 °C higher than the temperature of said injection molding for the heating in said crosslinking step.

14. The production process of a resin molded article for electric part according to any one of claims 11 to 13, wherein two or more kinds of said polyfunctional crosslinking agent are used in combination as said crosslinking agent.

15. The production process of a resin molded article for electric part according to any one of claims 11 to 14, wherein said thermoplastic polymer is a polyamide based resin, and the major skeleton of said crosslinking agent is an N element-containing cyclic compound.

16. The production process of a resin molded article for electric part according to any one of claims 11 to 15, wherein said trifunctional crosslinking agent is a compound represented by the following general formula (I): 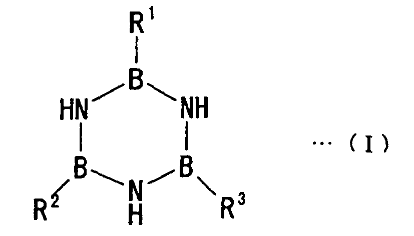 wherein R¹ to R³ each represents a group selected from -OR⁴-CR⁵=CH₂, -R⁴-OOC-CR⁵=CH₂, -R⁴-CR⁵=CH₂, -HNOC-CR⁵=CH₂, and -HN-CH₂-CR⁵=CH₂; R⁴ represents an alkylene group having from 1 to 5 carbon atoms; R⁵ represents hydrogen or a methyl group; and R¹ to R³ may be the same or different.

17. The production process of a resin molded article for electric part according to any one of claims 11 to 16, wherein said crosslinking agent is contained in an amount of from 0.5 to 10 parts by weight based on 100 parts by weight of said thermoplastic polymer.

18. The production process of a resin molded article for electric part according to any one of claims 11 to 17, wherein said reinforcing fiber is contained in an amount of from 5 to 40 % by weight based the whole of said resin composition, and said reinforcing fiber is a glass fiber the surface of which has been treated with a resin.

19. The production process of a resin molded article for electric part according to any one of claims 11 to 18, wherein said inorganic filler is contained in an amount of from 1 to 15 % by weight based on the whole of said resin composition.

20. The production process of a resin molded article for electric part according to claim 19, wherein stratiform clay having a silicate layer laminated therein is contained as said inorganic filler, and said stratiform clay is contained in an amount of from 1 to 10 % by weight based on the whole of said resin composition.

21. The production process of a resin molded article for electric part according to any one of claims 11 to 20, wherein said resin composition contains a flame retarder, and said flame retarder is contained in an amount of from 2 to 35 % by weight based on the whole of said resin composition.

22. The production process of a resin molded article for electric part according to claim 21, wherein a monofunctional organophosphorus compound containing one unsaturated group in the end thereof is contained as said flame retarder.

23. The production process of a resin molded article for electric part according to any one of claims 11 to 22, wherein said electric part is an electromagnetic switch.

## Patentansprüche

1. Harzformkörper für elektrische Teile, der **dadurch gekennzeichnet ist, daß** er erhalten ist durch Formen und Verfestigen einer Harzzusammensetzung, die ein thermoplastisches Polymer, ein Vernetzungsmittel, das ein polyfunktionales Monomer oder Oligomer mit einer ungesättigten Gruppe in Enden des Hauptgerüsts umfaßt, einen anorganischen Füllstoff und eine Verstärkungsfaser enthält, und dann Vernetzen des thermoplastischen Polymers durch Erwärmen oder Bestrahlen und worin das Vernetzungsmittel wenigstens ein dreifunktionelles Vernetzungsmittel aufweist und am anorganischen Füllstoff absorbiert ist, wobei der Gehalt an dem Vernetzungsmittel von 0,5 bis 10 Gewichtsteile bezogen auf 100 Gewichtsteile des thermoplastischen Polymers beträgt.

2. Harzformkörper für elektrische Teile nach Anspruch 1, worin zwei oder mehr Arten des polyfunktionellen Vernetzungsmittels in Kombination als das Vernetzungsmittel verwendet werden.

3. Harzformkörper für elektrische Teile nach einem der Ansprüche 1 bis 2, worin das thermoplastische Polymer ein Harz auf Polyamid-Basis ist und das Hauptskelett des Vernetzungsmittels eine zyklische Verbindung ist, die ein N-Element enthält.

4. Harzformkörper für elektrische Teile nach einem der Ansprüche 1 bis 3, worin das Vernetzungsmittel eine Verbindung ist, die durch die folgende allgemeine Formel (I) wiedergegeben wird: 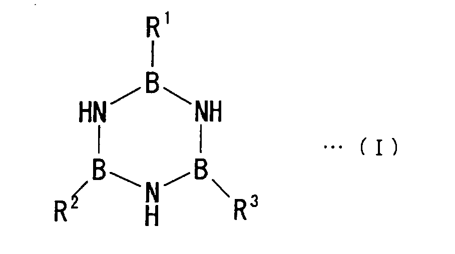 worin R¹ bis R³ je eine Gruppe darstellen, die ausgewählt ist aus -O-R⁴-CR⁵=CH₂, -R⁴-OOC-CR⁵=CH₂, -R⁴-CR⁵=CH₂, -HNOC-CR⁵=CH₂, und -HN-CH₂-CR⁵=CH₂; R⁴ eine Alkylengruppe mit 1 bis 5 Kohlenstoffatomen darstellt; R⁵ Wasserstoff oder eine Methylgruppe darstellt; und R¹ bis R³ gleich oder verschieden sein können.

5. Harzformkörper für elektrische Teile nach einem der Ansprüche 1 bis 4, worin die Verstärkungsfaser in einer Menge von 5 bis 40 Gewichts-% bezogen auf die gesamte Harzzusammensetzung enthalten ist und die Verstärkungsfaser eine Glasfaser ist, deren Oberfläche mit einem Harz behandelt worden ist.

6. Harzformkörper für elektrische Teile nach einem der Ansprüche 1 bis 5, worin der anorganische Füllstoff in einer Menge von 1 bis 15 Gewichts-% bezogen auf die gesamte Harzzusammensetzung enthalten ist.

7. Harzformkörper für elektrische Teile nach Anspruch 6, worin flözführender Ton mit einer darin enthaltenen Silikatschicht als der anorganische Füllstoff enthalten ist und der flözführende Ton in einer Menge von 1 bis 10 Gewichts-% bezogen auf die gesamte Harzzusammensetzung enthalten ist.

8. Harzformkörper für elektrische Teile nach einem der Ansprüche 1 bis 7, worin die Harzzusammensetzung einen Flammenhemmstoff enthält, und der Flammenhemmstoff in einer Menge von 2 bis 35 Gewichts-% bezogen auf die gesamte Harzzusammensetzung enthalten ist.

9. Harzformkörper für elektrische Teile nach Anspruch 8, worin eine monofunktionelle Organophosphorverbindung mit einer ungesättigten Gruppe an ihrem Ende als der Flammenhemmstoff enthalten ist.

10. Harzformkörper für elektrische Teile nach einem der Ansprüche 1 bis 9, worin das elektrische Teil ein elektromagnetischer Schalter ist.

11. Verfahren zur Herstellung eines Harzformkörpers für elektrische Teile, das **dadurch gekennzeichnet ist, daß** es umfaßt:
einen Adsorptionsschritt zum Adsorbieren eines Vernetzungsmittels, das ein polyfunktionelles Monomer oder Oligomer mit einer ungesättigten Gruppe an Enden des Hauptskeletts und wenigstens ein dreifunktionelles Vernetzungsmittel umfaßt, an einen anorganischen Füllstoff;
einen Knetschritt zum Kneten einer Harzzusammensetzung, welche den anorganischen Füllstoff nach der Adsorption, ein thermoplastisches Polymer, und eine Verstärkungsfaser enthält;
einen Schritt des Spritzgußformens der gekneteten Harzzusammensetzung; und
einen Vernetzungsschritt zum Herausnehmen der Harzzusammensetzung aus einer Form nach dem Spritzgußschritt und Erwärmen oder Bestrahlen derselben mit Strahlungen.

12. Verfahren zur Herstellung eines Harzformkörpers für elektrische Teile nach Anspruch 11, worin zum Bestrahlen mit Strahlungen in dem Vernetzungsschritt mit Elektronenstrahlen oder γ-Strahlen mit einer Dosis von 10 kGy oder mehr bestrahlt wird.

13. Verfahren zur Herstellung eines Harzformkörpers für elektrische Teile nach Anspruch 11, worin zum Erwärmen im Vernetzungsschritt das Erwärmen bei einer Temperatur von wenigstens 5°C über der Temperatur des Spritzgußformens durchgeführt wird.

14. Verfahren zur Herstellung eines Harzformkörpers für elektrische Teile nach einem der Ansprüche 11 bis 13, worin zwei oder mehr Arten des polyfunktionellen Vernetzungsmittels in Kombination als das Vernetzungsmittel verwendet werden.

15. Verfahren zur Herstellung eines Harzformkörpers für elektrische Teile nach einem der Ansprüche 11 bis 14, worin das thermoplastische Polymer ein auf Polyamid beruhendes Harz ist und das Hauptgerüst des Vernetzungsmittels eine ein N-Element enthaltende zyklische Verbindung ist.

16. Verfahren zur Herstellung eines Harzformkörpers für elektrische Teile nach einem der Ansprüche 11 bis 15, worin das dreifunktionelle Vernetzungsmittel eine Verbindung ist, die durch die folgende allgemeine Formel (I) wiedergegeben wird: 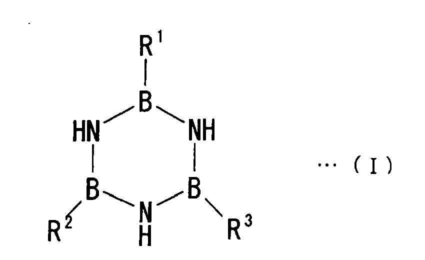 worin R¹ bis R³ je eine Gruppe darstellen, die ausgewählt ist aus -O-R⁴-CR⁵=CH₂, -R⁴-OOC-CR⁵=CH₂, -R⁴-CR⁵=CH₂, -HNOC-CR⁵=CH₂, und -HN-CH₂-CR⁵=CH₂; R⁴ eine Alkylengruppe mit 1 bis 5 Kohlenstoffatomen darstellt; R⁵ Wasserstoff oder eine Methylgruppe darstellt; und R¹ bis R³ gleich oder verschieden sein können.

17. Verfahren zur Herstellung eines Harzformkörpers für elektrische Teile nach einem der Ansprüche 11 bis 16, wobei das Vernetzungsmittel in einer Menge von 0,5 bis 10 Gewichtsteilen bezogen auf 100 Gewichtsteile des thermoplastischen Polymers enthalten ist.

18. Verfahren zur Herstellung eines Harzformkörpers für elektrische Teile nach einem der Ansprüche 11 bis 17, wobei die Verstärkungsfaser in einer Menge von 5 bis 40 Gewichts-% bezogen auf die gesamte Harzzusammensetzung enthalten ist und die Verstärkungsfaser eine Glasfaser ist, deren Oberfläche mit einem Harz behandelt worden ist.

19. Verfahren zur Herstellung eines Harzformkörpers für elektrische Teile nach einem der Ansprüche 11 bis 18, wobei der anorganische Füllstoff in einer Menge von 1 bis 15 Gewichts-% bezogen auf die gesamte Harzzusammensetzung enthalten ist.

20. Verfahren zur Herstellung eines Harzformkörpers für elektrische Teile nach Anspruch 19, wobei flözführender Ton mit einer darin vorhandenen Silikatschicht als der anorganische Füllstoff enthalten ist, und der flözführende Ton in einer Menge von 1 bis 10 Gewichts-% bezogen auf die gesamte Harzzusammensetzung enthalten ist.

21. Verfahren zur Herstellung eines Harzformkörpers für elektrische Teile nach einem der Ansprüche 11 bis 20, wobei die Harzzusammensetzung einen Flammenhemmstoff enthält, und der Flammenhemmstoff in einer Menge von 2 bis 35 Gewichts-% bezogen auf die gesamte Harzzusammensetzung enthalten ist.

22. Verfahren zur Herstellung eines Harzformkörpers für elektrische Teile nach Anspruch 21, wobei eine monofunktionelle Organophosphorverbindung mit einer ungesättigten Gruppe am Ende derselben als der Flammenhemmstoff enthalten ist.

23. Verfahren zur Herstellung eines Harzformkörpers für elektrische Teile nach einem der Ansprüche 11 bis 22, wobei das elektrische Teil ein elektromagnetischer Schalter ist.

## Revendications

1. Article moulé de résine pour une pièce électrique, qui est **caractérisé par** le résultat d'un moulage et d'une solidification d'une composition de résine contenant un polymère thermoplastique, un agent de réticulation comprenant un monomère ou un oligomère polyfonctionnel contenant un groupe non saturé aux extrémités de la structure principale, une charge inorganique, et une fibre de renfort, puis d'une réticulation dudit polymère thermoplastique par chauffage ou radiations, et dans lequel l'agent de réticulation comprend au moins un agent de réticulation trifonctionnel et est absorbé dans ladite charge inorganique, la teneur dudit agent de réticulation étant de 0,5 à 10 parties en poids, sur la base de 100 parties en poids dudit polymère thermoplastique.

2. Article moulé de résine pour une pièce électrique selon la revendication 1, dans lequel au moins deux sortes dudit agent de réticulation polyfonctionnel sont utilisées en association en tant que ledit agent de réticulation.

3. Article moulé de résine pour une pièce électrique selon l'une quelconque des revendications 1 à 2, dans lequel ledit polymère thermoplastique est une résine à base de polyamide, et la structure majeure dudit agent de réticulation est un composé cyclique contenant l'élément N.

4. Article moulé de résine pour une pièce électrique selon l'une quelconque des revendications 1 à 3, dans lequel ledit agent de réticulation est un composé représenté par la formule générale suivante (1) : 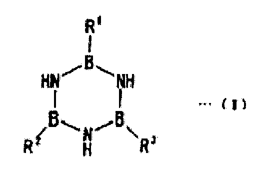 dans laquelle R¹ à R³ représentent chacun un groupe choisi parmi -O-R⁴-CR⁵=CH₂, -R⁴-OOC-CR⁵=CH₂, -R⁴-CR⁵=CH₂, -HNOC-CR⁵=CH₂, et -HN-CH₂-CR⁵=CH₂ ; R⁴ représente un groupe alkylène ayant de 1 à 5 atomes de carbone ; R⁵ représente un groupe hydrogène ou un groupe méthyle ; et R¹ à R³ peuvent être identiques ou différents.

5. Article moulé en résine pour une pièce électrique selon l'une quelconque des revendications 1 à 4, dans lequel ladite fibre de renfort est contenue en une quantité de 5 à 40 % en poids par rapport à l'ensemble de ladite composition de résine, et ladite fibre de renfort est une fibre de verre dont la surface a été traitée avec une résine.

6. Article moulé en résine pour une pièce électrique selon l'une quelconque des revendications 1 à 5, dans lequel ladite charge inorganique est contenue en une quantité de 1 à 15 % en poids, par rapport à l'ensemble de ladite composition de résine.

7. Article moulé en résine pour une pièce électrique selon la revendication 6, dans lequel l'argile stratiforme ayant une couche de silicate stratifiée est contenue en tant que ladite charge inorganique, et ladite argile stratiforme est contenue en une quantité de 1 à 10 % en poids, par rapport à l'ensemble de ladite composition de résine.

8. Article moulé en résine pour une pièce électrique selon l'une quelconque des revendications 1 à 7, dans lequel ladite composition de résine contient un retardateur de flamme, et ledit retardateur de flamme est contenu en une quantité de 2 à 35 % en poids, par rapport à l'ensemble de ladite composition de résine.

9. Article moulé en résine pour une pièce électrique selon la revendication 8, dans lequel un composé organophosphoreux monofonctionnel contenant un groupe non saturé dans son extrémité est contenu en tant que ledit retardateur de flamme.

10. Article moulé en résine pour une pièce électrique selon l'une quelconque des revendications 1 à 9, dans lequel ladite pièce électrique est un commutateur électromagnétique.

11. Processus de production d'un article moulé en résine pour une pièce électrique, qui est **caractérisé en ce qu'**il inclut une étape d'adsorption pour adsorber un agent de réticulation comprenant un monomère ou un oligomère polyfonctionnel, contenant un groupe non saturé dans les extrémités de la structure majeure, et au moins un agent de réticulation trifonctionnel sur une charge inorganique ; une étape de malaxage pour malaxer une composition de résine contenant la charge inorganique après l'adsorption, un polymère thermoplastique, et une fibre de renfort ; une étape de moulage par injection de ladite composition de résine pétrie ; et une étape de réticulation pour sortir ladite composition de résine après l'étape d'injection à partir d'un moule et la chauffer ou l'irradier avec des radiations.

12. Processus de production d'un article moulé en résine pour une pièce électrique selon la revendication 11, dans lequel des faisceaux d'électrons ou des rayons γ ayant un dosage de 10 kGy ou plus sont irradiés pour l'irradiation, avec des radiations dans ladite étape de réticulation.

13. Processus de production d'un article moulé en résine pour une pièce électrique selon la revendication 11, dans lequel le chauffage est réalisé à une température d'au moins 5 °C au-dessus de la température dudit moulage par injection pour le chauffage dans ladite étape de réticulation.

14. Processus de production d'un article moulé en résine pour une pièce électrique selon l'une quelconque des revendications 11 à 13, dans lequel au moins deux sortes dudit agent de réticulation polyfonctionnel sont utilisées en combinaison en tant que ledit agent de réticulation.

15. Processus de production d'un article moulé en résine pour une pièce électrique selon l'une quelconque des revendications 11 à 14, dans lequel ledit polymère thermoplastique est une résine à base de polyamide, et la structure majeure dudit agent de réticulation est un composé cyclique contenant l'élément N.

16. Processus de production d'un article moulé en résine pour une pièce électrique selon l'une quelconque des revendications 11 à 15, dans lequel ledit agent de réticulation trifonctionnel est un composé représenté par la formule générale suivante (I) : 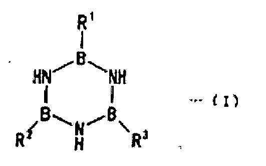 dans laquelle R¹ à R³ représentent chacun un groupe choisi parmi -O-R⁴-CR⁵=CH₂-, -R⁴-OOC-CR⁵=CH₂, R⁴-CR⁵=CH₂, -HNOC-CR⁵=CH₂, et -HN-CH₂-CR⁵=CH₂ ; R⁴ représente un groupe alkylène ayant de 1 à 5 atomes de carbone ; R⁵ représente un groupe hydrogène ou un groupe méthyle ; et R¹ à R³ peuvent être identiques ou différents.

17. Processus de production d'un article moulé en résine pour une pièce électrique selon l'une quelconque des revendications 11 à 16, dans lequel ledit agent de réticulation est contenu en une quantité de 0,5 à 10 parties en poids par rapport à 100 parties en poids dudit polymère thermoplastique.

18. Processus de production d'un article moulé en résine pour une pièce électrique selon l'une quelconque des revendications 11 à 17, dans lequel ladite fibre de renfort est contenue en une quantité de 5 à 40 % en poids par rapport à l'ensemble de ladite composition de résine, et ladite fibre de renfort est une fibre en verre dont la surface a été traitée avec une résine.

19. Processus de production d'un article moulé en résine pour une pièce électrique selon l'une quelconque des revendications 11 à 18, dans lequel ladite charge inorganique est contenue en une quantité de 1 à 15 % en poids par rapport à l'ensemble de ladite composition de résine.

20. Processus de production d'un article moulé en résine pour une pièce électrique selon la revendication 19, dans lequel l'argile stratiforme ayant une couche de silicate stratifiée est contenue en tant que ladite charge inorganique, et ladite argile stratiforme est contenue en une quantité de 1 à 10 % en poids par rapport à l'ensemble de ladite composition de résine.

21. Processus de production d'un article moulé en résine pour une pièce électrique selon l'une quelconque des revendications 11 à 20, dans lequel ladite composition de résine contient un retardateur de flamme, et ledit retardateur de flamme est contenu en une quantité de 2 à 35 % en poids par rapport à l'ensemble de ladite composition de résine.

22. Processus de production d'un article moulé en résine pour une pièce électrique selon la revendication 21, dans lequel un composé organophosphoreux monofonctionnel contenant un groupe non saturé au niveau de son extrémité est contenu en tant que ledit retardateur de flamme.

23. Processus de production d'un article moulé en résine pour une pièce électrique selon l'une quelconque des revendications 11 à 22, dans lequel ladite pièce électrique est un commutateur électromagnétique.
